# EUROPÄISCHE PATENTSCHRIFT

(11) **EP 2 280 870 B1**
(45) Veröffentlichungstag und Bekanntmachung des Hinweises auf die Patenterteilung: **21.08.2013**
(21) Anmeldenummer: 09737890.5
(22) Anmeldetag: 29.04.2009
(51) Int. Cl.: B64D 27/26, B64D 41/00

(54) **LAGERVORRICHTUNG ZUR LAGERUNG EINES HILFSAGGREGATS AN EINEM STRUKTURTEIL EINES FLUGZEUGS UND FLUGZEUG MIT EINER SOLCHEN LAGERVORRICHTUNG**
SUPPORT STRUCTURE FOR AN AUXILIARY POWER UNIT ON A STRUCTURAL PART OF AN AIRCRAFT AND AIRCRAFT COMPRISING SAID SUPPORT STRUCTURE
DISPOSITIF SUPPORT POUR LE LOGEMENT D'UN UNITE DE PUISSANCE AUXILIAIRE SUR UN ELEMENT DE STRUCTURE D'UN AVION ET AVION MUNI DE CE DISPOSITIF SUPPORT

(30) Priorität: 29.04.2008 US 48571; 29.04.2008 DE 102008021431
(43) Veröffentlichungstag der Anmeldung: 09.02.2011
(73) Patentinhaber: Airbus Operations GmbH, 21129 Hamburg (DE)
(72) Erfinder: PIEZUNKA, Volker, 22559 Hamburg (DE)
(74) Vertreter: Schatt, Markus F.
(86) Internationale Anmeldenummer: PCT/EP2009/003119
(87) Internationale Veröffentlichungsnummer: WO 2009/132846

(56) Entgegenhaltungen:
- EP-A2- 1 764 306
- WO-A2-02/40347
- WO-A2-2006/108028
- DE-T2- 69 804 758
- US-A- 2 965 338

## Beschreibung

Die Erfindung betrifft eine Lagervorrichtung zur Lagerung eines Hilfsaggregats an einem Strukturteil eines Flugzeugs und ein Flugzeug mit einer Lagervorrichtung.

Das Dokument DE 698 04 758 T2 beschreibt eine Lagervorrichtung zur Lagerung eines Antriebstriebwerks an einem Strukturteil eines Flugzeugs.

Eine Aufhängungs-Vorrichtung für ein Hilfsaggregat eines Flugzeugs, mit der eine Schwingungskompensation erreicht werden soll, ist aus der WO2006/108028 bekannt, welche als nächstliegender Stand der Technik betrachlet wird. Die Aufhängungsvorrichtung kann aus einer Mehrzahl von Lagerstangen geringer Steifigkeit gebildet sein, wobei die Steifigkeit mittels Elastomer-Lagerungen an die Schwingungen des Hilfsaggregats angepasst ist. Eine Erhöhung der Betriebssicherheit der gesamten Anordnung wird durch die Vermehrfachung der Lagerstäbe erreicht.

Weiterhin sind Lagerungsvorrichtungen für ein Hilfsaggregat eines Flugzeugs aus der US 2 965 338 und der US 274 510 bekannt.

Aufgabe der Erfindung ist es, eine Lagervorrichtung zur Lagerung eines Hilfsaggregats an einem Strukturteil eines Flugzeugs und ein Flugzeug mit einer Lagervorrichtung zu schaffen, mit der die Sicherheit der Lagerung verbessert werden kann und dabei Versteifungsmaßnahmen an der Flugzeugstruktur gering sein können.

Diese Aufgabe wird mit den Merkmalen der unabhängigen Patentansprüche gelöst. Weitere Ausführungsformen sind in den auf diese rückbezogenen Unteransprüchen angegeben.

Erfindungsgemäß ist insbesondere eine Lagervorrichtung zur Lagerung eines Hilfsaggregats an einem Strukturteil eines Flugzeugs vorgesehen, die zumindest zwei Aufnahme-Vorrichtungen zum Befestigen des Hilfsaggregats aufweist. Die Lagervorrichtung weist eine Auffangvorrichtung oder generell eine Sicherheits-Lagervorrichtung auf mit einer an dem Hilfsaggregat angeordneten ersten Halte-Vorrichtung, mit einer an zumindest einer an dem Rumpfteil oder an zumindest einer ersten der Aufnahme-Vorrichtungen angeordneten zweiten Halte-Vorrichtung und mit einer Verbindungs-Vorrichtung zur Kopplung der Halte-Vorrichtungen. Die Anordnung der ersten und der zweiten Halte-Vorrichtung kann über ein Drehgelenk oder eine Bolzen/Ösen-Verbindung realisiert sein. Die Auffangvorrichtung ist zum Halten des Hilfsaggregat unter Ausbildung eines Sicherheits-Lastpfades für den Fall ausgeführt und geeignet, in dem an der ersten Aufnahme-Vorrichtung ein Bruchschaden auftritt. Dabei ist die Verbindungs-Vorrichtung derart ausgeführt, dass diese bei der Ausbildung eines Sicherheits-Lastpfades eine Länge aufweist, die um einen Betrag größer ist als der Abstand zwischen der ersten Halte-Vorrichtung und der zweiten Halte-Vorrichtung im Normalzustand der ersten Aufnahme-Vorrichtung und die Verbindungs-Vorrichtung im Normalzustand der ersten Aufnahme-Vorrichtung Betriebsbewegungen und/oder Vibrations-Bewegungen des Hilfsaggregat gegenüber dem Strukturteil dämpfungsfrei zulässt.

Bei dem Auftreten eines Bruchschadens an der ersten Aufnahme-Vorrichtung hält auf diese Weise die Auffangvorrichtung das Hilfsaggregat derart dass, diese - je nach Anforderung an das Flugzeug-Gesamtsystem - aufgrund der dann entstandenen Bewegbarkeit des Hilfsaggregats nur einen vorbestimmten oder zugelassenen Maximal-Effekt oder Maximal-Schaden verursachen kann. Der Maximal-Schaden kann z.B. auch sein, dass das Hilfsaggregat das benachbarte Strukturteil des Flugzeugs nicht berühren darf. In einem andern Ausführungsbeispiel kann als Maximal-Schaden definiert sein, dass das Hilfsaggregat in diesem Zustand das benachbarte Strukturteil des Flugzeugs beschädigen, aber nicht durchschlagen darf. In einem weiteren Ausführungsbeispiel kann auch zugelassen sein, dass das Hilfsaggregat in diesem Zustand das benachbarte Strukturteil des Flugzeugs durchschlagen darf. Dieses Ausführungsbeispiel kann insbesondere dann vorgesehen sein, wenn das Strukturteil des Flugzeugs doppelwandig ausgeführt ist, wobei in diesem Fall insbesondere vorgesehen sein kann, dass das Hilfsaggregat nur die innere, dem Hilfsaggregat zugewandte Wand des Strukturteils durchschlagen darf. Durch die erfindungsgemäße Lösung der Auffangvorrichtung wird in jedem Fall erreicht, dass das Hilfsaggregat sich von dem Strukturteil, an dem diese im Normalzustand mittels der Aufnahme-Vorrichtungen gelagert ist, festgehalten wird, wenn die dieser jeweils zugeordnete Aufnahme-Vorrichtung bricht oder versagt.

Die Betriebsbewegungen sind Bewegungen des Hilfsaggregats relativ zu den Aufnahme-Vorrichtungen oder das Rumpfteil vor allem aufgrund äußerer, im Betrieb auf das Flugzeug wirkender Lasten. Ebenso sind die Vibrations-Bewegungen Bewegungen des Hilfsaggregats relativ zu den Aufnahme-Vorrichtungen oder das Rumpfteil die im Betrieb auftreten.

Die Aufnahme-Vorrichtungen können insbesondere derart angeordnet sein, dass diese das Hilfsaggregat stehend lagern, das heißt, dass das Hilfsaggregat oberhalb dem sie tragenden Bereich des Rumpfteils gelegen ist. Dabei können die Aufnahme-Vorrichtungen insbesondere auf dem Rücken des Rumpfes angebracht sind. "Oberhalb" heißt, dass bei der Stellung des Flugzeugs am Boden das Hilfsaggregat entgegen der Schwerkraftrichtung gesehen oberhalb des Rumpfes gelegen ist.

Die Auffangvorrichtung kann derart ausgebildet sein, dass diese den zwischen dem Strukturteil und ds Hilfsaggregat wirkenden Sicherheits-Lastpfad mit der Übertragung von mindestens 500 N übernehmen kann.

Weiterhin kann die Auffangvorrichtung derart ausgeführt sein, dass diese in dem Normalzustand der jeweiligen Aufnahmevorrichtung entspannt und bei Ausbildung eines Lastpfads gespannt oder gestreckt ist. Dabei ist der Betrag, um den die maximale Länge der Auffangvorrichtung zwischen der Befestigungsstelle an dem Hilfsaggregat und der Befestigungsstelle an dem Strukturteil bei Ausbildung des Sicherheits-Lastpfads bei Brechen der ersten Aufnahmevorrichtung, also in einem ausgefahrenen oder gestreckten Zustand der Auffangvorrichtung, um mindestens 5 % größer als der Abstand zwischen diesen Befestigungsstellen im Normalzustand der ersten Aufnahmevorrichtung mit der ersten Halte-Vorrichtung und der zweiten Halte-Vorrichtung.

Die Auffangvorrichtung kann insbesondere derart ausgeführt sein, dass die Länge der Auffangvorrichtung zwischen der Befestigungsstelle an dem Hilfsaggregat und der Befestigungsstelle an dem Strukturteil im betriebsfähigen Zustand der ersten Aufnahmevorrichtung mit der ersten Halte-Vorrichtung zwischen 100 mm und 500 mm beträgt und dass der Betrag, um den diese Länge geringer ist als die maximale Länge der Auffangvorrichtung bei Ausbildung des Sicherheits-Lastpfads oder bei Brechen der ersten Aufnahmevorrichtung zwischen den Befestigungsstellen zwischen 1 mm und 100 mm beträgt.

Zumindest eine der Aufnahme-Vorrichtungen kann eine Dämpfungs-Vorrichtung zur Dämpfung von Vibrationen des Hilfsaggregats gegenüber dem Rumpfteil aufweisen. Die Dämpfungsvorrichtung kann dabei insbesondere ein Dämpfer-Gehäuse aufweisen. Die Dämpfungs-Vorrichtung kann insbesondere ein Dämpfer-Gehäuse und ein darin integriertes Dämpferelement aufweisen und zumindest eine der Aufnahme-Vorrichtungen kann ein rumpfseitiges Befestigungsteil zur Montage des Dämpfer-Gehäuses an dem Rumpfteil und ein Trägerteil aufweisen, das das Dämpfer-Gehäuse mit dem Hilfsaggregat koppelt. Dabei kann vorgesehen sein, dass die erste Halte-Vorrichtung aus einem ersten Verbindungsteil und die zweite Halte-Vorrichtung aus einem zweiten Verbindungsteil gebildet ist, wobei das erste Verbindungsteil an zumindest einer der Aufnahme-Vorrichtungen und/oder an dem Dämpfer-Gehäuse und/oder dem Rumpfteil befestigt ist und das zweite Verbindungsteil an dem Hilfsaggregat befestigt ist und wobei die Verbindungsteile derart miteinander gekoppelt sind, dass diese relativ zueinander bewegbar sind.

Nach einem weiteren Ausführungsbeispiel kann die Dämpfungs-Vorrichtung ein Dämpfer-Gehäuse und ein darin integriertes Dämpferelement aufweisen und zumindest eine der Aufnahme-Vorrichtungen ein rumpfseitiges Trägerteil zur Montage des Dämpfer-Gehäuses an dem Rumpfteil und ein Befestigungsteil aufweisen, das das Dämpfer-Gehäuse mit dem Hilfsaggregat koppelt. Dabei kann vorgesehen sein, dass die erste Halte-Vorrichtung aus einem ersten Verbindungsteil und die zweite Halte-Vorrichtung aus einem zweiten Verbindungsteil gebildet ist, wobei das erste Verbindungsteil an dem Hilfsaggregat befestigt ist und das zweite Verbindungsteil an zumindest einer der Aufnahme-Vorrichtungen und/oder an dem Dämpfer-Gehäuse und/oder dem Rumpfteil befestigt ist und wobei die Verbindungsteile derart miteinander gekoppelt sind, dass diese relativ zueinander bewegbar sind.

Nach einem Ausführungsbeispiel der Verbindungs-Vorrichtung kann das erste Verbindungsteil und das zweite Verbindungsteil mittels einer Bolzen-Verbindung miteinander gekoppelt sein. Nach einem weiteren Ausführungsbeispiel der Verbindungs-Vorrichtung kann eines der Verbindungsteile eine Kulisse zur bewegbaren Aufnahme des anderen der Verbindungsteile aufweisen.

Nach einem weiteren Ausführungsbeispiel der Verbindungs-Vorrichtung kann die Verbindungs-Vorrichtung der Auffangvorrichtung oder Fangvorrichtung zumindest abschnittsweise flexibel und dabei insbesondere bandförmig gebildet sein. Dabei kann die Verbindungs-Vorrichtung der Fangvorrichtung insbesondere ein flexibles Band aufweisen. Das flexible Band kann aus miteinander verflochtenen Metalldrähten gebildet sein.

Auch kann der flexible Abschnitt der Verbindungs-Vorrichtung aus einer Kette und/oder einem Halte-Seil gebildet sein.

Nach einem weiteren Ausführungsbeispiel der Verbindungs-Vorrichtung der flexible Abschnitt längenveränderbar und dabei insbesondere aus einem dehnbarem oder elastischem Material, wie z.B. Gummi, gebildet sein. Das dehnbare oder elastische Material kann insbesondere ummantelt sein, um eine Maximal-Länge des Abschnitts vorzusehen.

Nach einem weiteren Ausführungsbeispiel der Verbindungs-Vorrichtung kann die Verbindungs-Vorrichtung längenveränderbar und aus einem Teleskop-Rohr gebildet sein, das eine Anschlagsvorrichtung aufweist, mit der die Länge des Teleskop-Rohrs auf eine Maximal-Länge begrenzt ist.

Bei einem weiteren Ausführungsbeispiel der Verbindungs-Vorrichtung kann die Verbindungs-Vorrichtung aus einem Gliederstab gebildet sein, dessen Glieder in ihrer Länge hintereinander gekoppelt sind.

Weiterhin kann ein Ausführungsbeispiel der Verbindungs-Vorrichtung vorgesehen sein, bei dem die Verbindungs-Vorrichtung aus einer Hebel-Anordnung gebildet ist, deren

Hebel derart angeordnet sind, dass die Hebel-Anordnung ziehharmonikaförmig aus- und einfahren kann.

Nach einem weiteren Aspekt der Erfindung ist eine Lagervorrichtung zur Lagerung des Hilfsaggregats an einem Strukturteil eines Flugzeugs vorgesehen, die zumindest eine Aufnahme-Vorrichtung zum Befestigen des Hilfsaggregats aufweist, die eine Stützvorrichtung zur Übertragung der zwischen dem Strukturteil und dem Hilfsaggregat auftretenden Lagerkräfte aufweist. Die Stützvorrichtung kann insbesondere aus zwei Armen und einem zentralen Bolzen gebildet sein. Weiterhin weist die Lagervorrichtung eine Sicherheits-Lagervorrichtung auf, die Betriebsbewegungen und/oder Vibrations-Bewegungen des Hilfsaggregats gegenüber dem Strukturteil in einer translatorischen Richtung oder zwei translatorischen Richtungen zulässt, wobei die zugelassenen Relativbewegungen derart vorgesehen sind, dass die Sicherheits-Lagervorrichtung bei einem Bruch der Stützvorrichtung in einem vorbestimmten Lastpfad-Bereich das Hilfsaggregat in einem vorbestimmten Bewegungsbereich hält, bei der das Hilfsaggregat der diese umgebenden Struktur nur einen vorbestimmten, oben beschriebenen Maximaleffekt zufügen kann.

Die Aufnahmevorrichtung kann nach einem hierin beschriebenen Ausführungsbeispiel derselben ausgeführt sein.

Die Lagervorrichtung kann insbesondere derart ausgebildet sein, dass die Relativbewegungen eine Größe zwischen 1 mm und 30 mm haben.

Bei diesen Ausführungsformen kann vorgesehen sein, dass die zumindest eine Aufnahme-Vorrichtung eine Dämpfungs-Vorrichtung zur Dämpfung von Vibrationen des Hilfsaggregats gegenüber dem Rumpfteil aufweist.

Die Lagervorrichtung kann mit einer Sicherheits-Lagervorrichtung mit einem ersten Verbindungsteil und einem zweiten Verbindungsteil gebildet sein, wobei das erste Verbindungsteil an zumindest einer der Aufnahme-Vorrichtungen und/oder an dem Dämpfer-Gehäuse und/oder dem Rumpfteil befestigt ist und das zweite Verbindungsteil an dem Hilfsaggregat befestigt ist und wobei die Verbindungsteile derart miteinander gekoppelt sind, dass diese relativ zueinander bewegbar sind. Dabei können insbesondere die Verbindungsteile über eine Bolzen-Ösen-Verbindung derart miteinander gekoppelt sein, dass diese relativ zueinander bewegbar sind.

Die Lagervorrichtung kann erfindungsgemäß generell und insbesondere zusammen mit der Sicherheits-Lagervorrichtung derart ausgeführt sein, dass die zumindest eine Aufnahme-Vorrichtung eine Lagerung des Hilfsaggregats in zwei Raumkoordinaten vorsieht und dabei einen Lagerungs-Freiheitsgrad in einer Raumkoordinate zulässt. In diesem Fall kann insbesondere vorgesehen sein, das die Sicherheits-Lagervorrichtung derart ausgeführt ist, dass diese bei einem Bruch der Stützvorrichtung einer Aufnahme-Vorrichtung in dem vorbestimmten Lastpfad-Bereich derselben einen Lastpfad in Richtung des Lagerungs-Freiheitsgrads der Aufnahme-Vorrichtung übernimmt. Auf diese Weise kann der Bruch einer Schlüsselkomponente an der Aufnahme-Vorrichtung abgesichert werden. In diesem Ausführungsbeispiel ergänzt die Sicherheits-Lagervorrichtung die Lagerungseigenschaften der Aufnahme-Vorrichtung, so dass dadurch ein effektive Sicherungsfunktion erfüllt werden kann.

Bei diesen Ausführungsbeispielen der Erfindung kann die Aufnahme-Vorrichtung insbesondere aus einem rumpfseitigen Befestigungsteil, einem daran angebrachten Stützteil und zumindest zwei daran angebrachten Stützstangen gebildet sein, an deren Enden jeweils ein Lagerteil angebracht ist, das jeweils mit einer entsprechenden Lagerstelle des Hilfsaggregats ein sphärisches Lager ausbildet.

Nach einem weiteren Aspekt ist eine Lagervorrichtung zur Lagerung eines Hilfsaggregats an einem Strukturteil eines Flugzeugs vorgesehen, aufweisend zumindest zwei Aufnahme-Vorrichtungen zur Lagerung des Hilfsaggregats,
• wobei eine erste Aufnahmevorrichtung eine Lagerstelle für das Hilfsaggregat ausbildet, die diese in sämtlichen drei Raum-Koordinaten lagert und dass der ersten Aufnahmevorrichtung eine Auffangvorrichtung zugeordnet ist, die zum Halten des Hilfsaggregats unter Ausbildung eines Sicherheits-Lastpfades geeignet ist, wenn an der ersten Halte-Vorrichtung ein Bruchschaden auftritt, wobei die Verbindungs-Vorrichtung bei der Ausbildung eines Sicherheits-Lastpfades eine Länge aufweist, die um einen Betrag größer ist als der Abstand zwischen der ersten Halte-Vorrichtung und der zweiten Halte-Vorrichtung im Normalzustand der ersten Aufnahme-Vorrichtung und die Verbindungs-Vorrichtung im Normalzustand der ersten Aufnahme-Vorrichtung Betriebsbewegungen und/oder Vibrations-Bewegungen des Hilfsaggregats gegenüber dem Strukturteil dämpfungsfrei zulässt,
• dass zumindest eine zweite Aufnahme-Vorrichtung eine Lagerung des Hilfsaggregats in zwei Raumkoordinaten vorsieht und dabei einen Lagerungs-Freiheitsgrad in einer Raumkoordinate zulässt und dass der zweiten Aufnahme-Vorrichtung eine Sicherheits-Lagervorrichtung zugeordnet ist, die geeignet ist, bei einem Bruch der Stützvorrichtung einer Aufnahme-Vorrichtung in dem vorbestimmten Lastpfad-Bereich derselben einen Lastpfad in Richtung des Lagerungs-Freiheitsgrads der Aufnahme-Vorrichtung zu übernehmen.

Nach einem weiteren Aspekt der Erfindung ist ein Flugzeug vorgesehen, aufweisend:
- einen Rumpf mit einem Rumpfteil, der einen Raum aufweist,
- ein in dem Raum angeordnetes Hilfsaggregat,
- eine Lagervorrichtung, die nach einem der Ausführungsbeispiele der Erfindung gebildet ist.

Hinsichtlich der strukturellen Integration des Hilfsaggregats im Flugzeug oder dessen Tragwerk, auch "Airframe" genannt, kann zumindest eine der Aufnahme-Vorrichtungen an einem Struktur-Bauteil oder am Rumpfteil des Tragwerks oder am Tragwerk angeordnet sein. Dabei kann insbesondere die Aufnahme-Vorrichtung einen am Rumpfteil angebrachten Flansch aufweisen. Das Struktur-Bauteil oder das Rumpfteil kann ein Trägerbauteil sein. Das Trägerbauteil kann insbesondere ein Spant sein.

Das Hilfsaggregat kann insbesondere an einem Rumpfteil außerhalb der Druckzelle des Flugzeugs angeordnet sein. Dabei kann weiterhin vorgesehen sein, dass das Hilfsaggregat innerhalb einer Verschalung angeordnet ist, die einen Übergang zwischen Flügel und Rumpf bildet.

Auch kann das Hilfsaggregat an einem Rumpfteil angeordnet sein, der zwischen den Flügeln des Flugzeugs gelegen ist. Alternativ oder zusätzlich kann vorgesehen sein, dass das Hilfsaggregat an einem Rumpfteil angeordnet ist, der zwischen dem Ausfahrbereich der Landeklappen eines Flügels gelegen ist.

Erfindungsgemäß ist insbesondere auch ein Flugzeug vorgesehen, aufweisend:
- einen Rumpf mit einem Rumpfteil,
- ein Hilfsaggregat,
- zumindest zwei am Rumpf vorgesehene Aufnahme-Vorrichtungen zum Befestigen des Hilfsaggregats,
- eine Fangvorrichtung oder Auffangvorrichtung mit einer an dem Hilfsaggregat angeordneten ersten Halte-Vorrichtung, mit einer an zumindest einer mit dem Rumpfteil oder mit zumindest einer der Aufnahme-Vorrichtungen angeordneten zweiten Halte-Vorrichtung und mit einer Verbindungs-Vorrichtung zur Kopplung der Halte-Vorrichtungen, wobei die Fangvorrichtung derart gestaltet ist, dass diese Betriebsbewegungen und/oder Vibrations-Bewegungen zwischen den Halte-Vorrichtungen zulässt.

Das Flugzeug kann insbesondere ein Hochdecker-Flugzeug sein. Dabei kann dias Hilfsaggregat an einem Rumpfteil hinter den Flügeln angeordnet sein. Durch die erfindungsgemäße Lösung oder Lagerungsvorrichtung wird ein Herausfallen des Hilfsaggregats aus dem Raum vermieden. Ohne dass besondere weitere strukturelle Maßnahmen an der Flugzeug-Struktur oder am Tragewerk des Flugzeugs vorgenommen werden müssen. So kann z.B. katastrophale Schäden am Flugzeug mit einfachen Mitteln verhindert werden und insbesondere ein Beschädigen von Landeklappen oder Steuerklappen am Flügel.

Weiterhin kann das Flugzeug ein Tiefdecker-Flugzeug sein. Dabei kann das Hilfsaggregat insbesondere an einem Rumpfteil über den Flügeln angeordnet sein. Das erfindungsgemäß vorgesehene Hilfsaggregat kann insbesondere gebildet sein aus:
- einem Gasturbinen-Triebwerk mit einer Ausgangswelle,
- einem an diesem angekoppelten Druckluft-Kompressor, dessen Antriebswelle mit der Ausgangswelle des Gasturbinen-Triebwerks gekoppelt ist.

Mit der Erfindung ist insbesondere ein Flugzeug vorgesehen mit einem Compartment für das Hilfsaggregat mit einem darin angeordneten Hilfsaggregat und mit einer Aufnahme-Vorrichtung zum Halten oder Befestigen des Hilfsaggregats an einem Rumpfteil im normalen Betrieb, bei dem für die Befestigung des Hilfsaggregats nur minimale strukturelle Versteifungsmaßnahmen erforderlich sind und bei dem durch das Vorsehen einer Fang-Vorrichtung bei einem Schaden an der Aufnahme-Vorrichtung eine Beschädigung der das Hilfsaggregat umgebenden Struktur eingegrenzt und minimiert werden kann.

Im Folgenden werden Ausführungsbeispiele der Erfindung an Hand der beigefügten Figuren beschrieben, die zeigen:
- Figur 1 eine perspektivische Darstellung einer nach einem Ausführungsbeispiel der Erfindung vorgesehenen Lagerung eines Hilfsaggregats in einem entsprechenden Compartment schräg von oben gesehen, wobei die Wände des Compartments durchsichtig dargestellt sind;
- Figur 2 eine perspektivische Darstellung eines Raums eines erfindungsgemäßen Flugzeugs, in dem das Hilfsaggregat und eine Aufnahme-Vorrichtung zum Befestigen des Hilfsaggregats vorhanden sind;
- Figur 3a eine perspektivische Darstellung eines Ausführungsbeispiels einer Aufnahme-Vorrichtung zum Befestigen des Hilfsaggregats am Rumpf, wobei die Aufnahme-Vorrichtung eine Dämpfer-Vorrichtung aufweist;
- Figur 3b eine perspektivische Darstellung eines weiteren Ausführungsbeispiels einer Aufnahme-Vorrichtung zum Befestigen des Hilfsaggregats am Rumpf, das als Mehrstangen-Aufnahmevorrichtung ausgebildet ist;
- Figur 4 eine perspektivische Darstellung eines weiteren Ausführungsbeispiels einer Aufnahme-Vorrichtung zum Befestigen des Hilfsaggregats am Rumpf, die zwei Befestigungsstangen, an denen das Hilfsaggregat anzubringen ist, und ein Ausführungsbeispiel einer erfindungsgemäß vorgesehenen Fangvorrichtung;
- Figur 5 eine perspektivische Darstellung des Ausführungsbeispiels der Aufnahme-Vorrichtung nach der Figur 4 in einem am Rumpfteil integrierten Zustand;
- Figur 6 eine perspektivische Darstellung eines weiteren Ausführungsbeispiels der Aufnahme-Vorrichtung in einem am Rumpfteil integrierten Zustand mit einem weiteren Ausführungsbeispiel einer erfindungsgemäß vorgesehenen Fangvorrichtung.

Erfindungsgemäß ist ein Flugzeug mit einem Hilfsaggregat E vorgesehen, die insbesondere eine Kombination eines Gasturbinen-Triebwerks 3 und optional eines Generators zur Erzeugung von Strom z.B. zur Versorgung von Flugzeugsystemen beim Stehen des Flugzeugs am Boden und optional zum Erzeugen von Druckluft zum Anlassen der Triebwerke aufweist. Auch kann das Hilfsaggregat E im Flug zur Entlastung der Flugzeug-Triebwerke in insbesondere bei Ausfall eines Triebwerks eingesetzt werden, indem diese in diesem Fall Flugzeug-Verbraucher versorgt. An das Hilfsaggregat E sind ein Abgasrohr 4, ein Lufteinlauf 5 und ein Druckluft-Kompressor 6 angeordnet. Das Hilfsaggregat E ist an einem Rumpfteil 1 der Rumpfstruktur an mehreren, d.h. an zumindest zwei Lagerstellen mittels Aufnahme-Vorrichtungen A gelagert vorgesehen. In einem Schadensfall kann sich bei dem Bruch eines an einer Lagervorrichtung vorhandenen Lastpfads das Hilfsaggregat E vom Rumpf oder Rumpfteil 1 lösen und im Betrieb den Rumpf beschädigen.

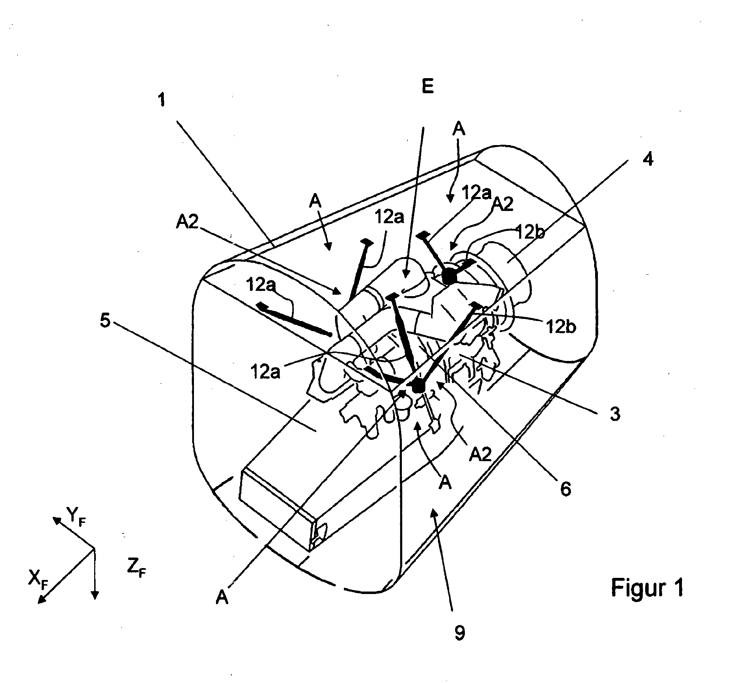

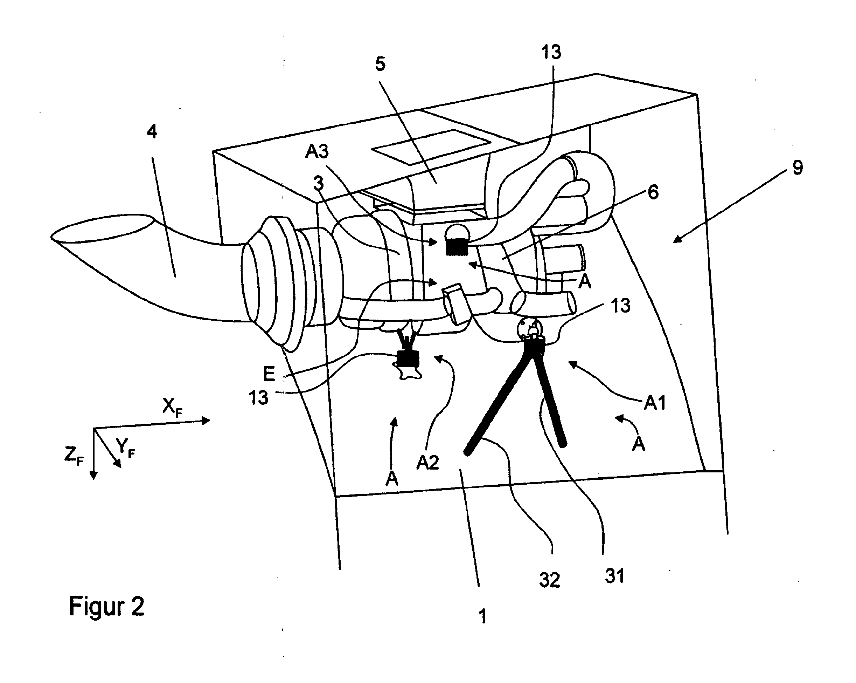

In der Figur 1 ist ein in einem Bauteil 1 eines Flugzeug-Hecks angeordneter Raum mit einem darin angeordneten Hilfsaggregat E dargestellt, die mit Aufnahme-Vorrichtungen A am Bauteil 1 befestigt sind. In der Figur 2 sind Komponenten, die eine zu in der Figur 1 dargestellten Komponenten ähnliche Funktion haben, mit demselben Bezugzeichen versehen.

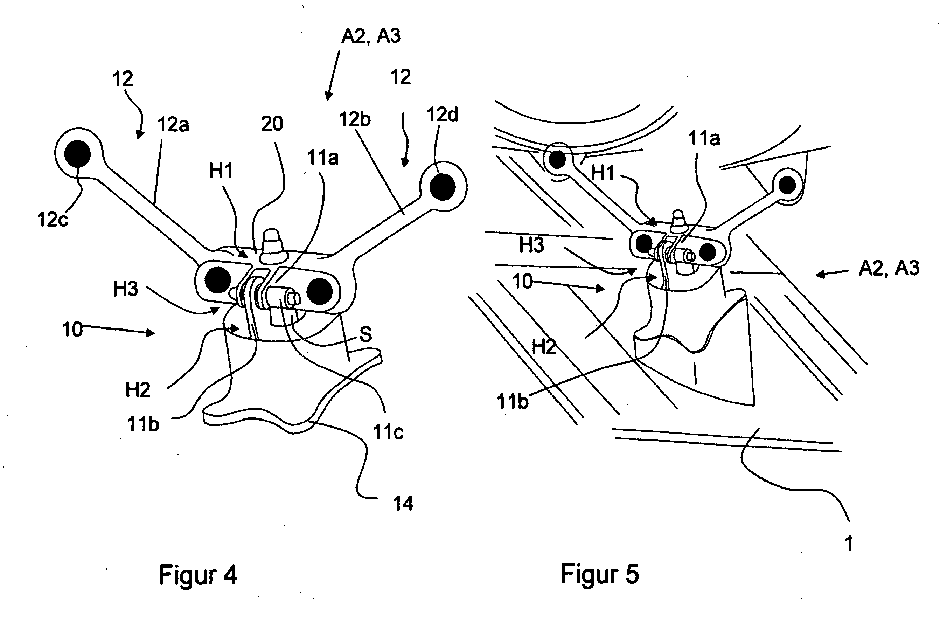

Die erfindungsgemäße Lagervorrichtung zur Lagerung eines Hilfsaggregats E an einem Strukturteil eines Flugzeugs, weist zumindest zwei Aufnahme-Vorrichtungen A zum Befestigen des Hilfsaggregats E auf. Eine oder mehrere der Aufnahme-Vorrichtungen A können als Mehrstangen-Vorrichtungen und dabei insbesondere nach den Figuren 4 und 5 gestaltet sein.

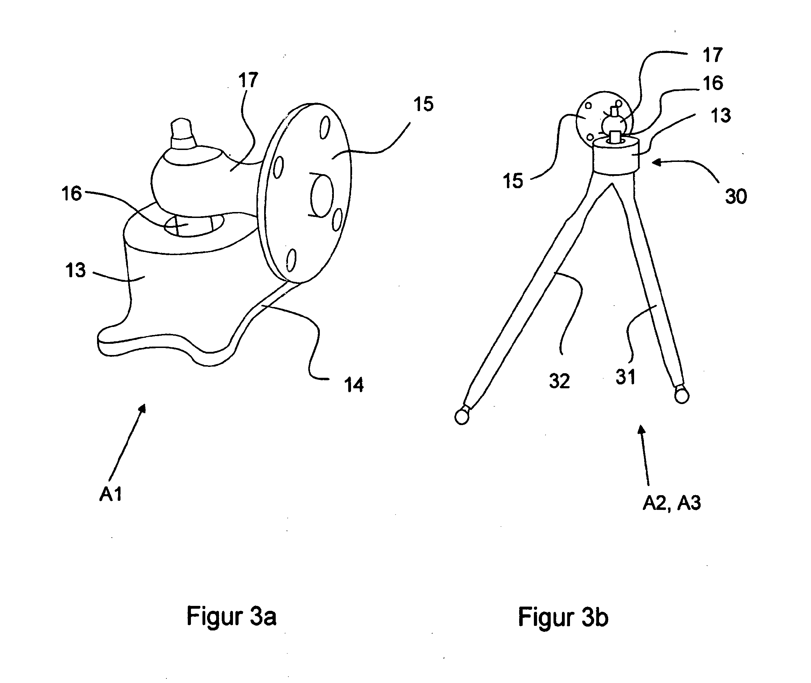

Bei dem in der Figur 1 dargestellten Ausführungsbeispiel der Lagervorrichtung sind drei Aufnahme-Vorrichtungen A, A2 dargestellt, die jeweils als Mehrstangen-Vorrichtungen jeweils mit Stützstangen 12a, 12b zur rumpfseitigen Lagerung des Hilfsaggregats E ausgebildet sind. Eine oder mehrere Aufnahme-Vorrichtungen können dabei auch mit mehr als zwei Stützstangen und insbesondere nach den Figuren 3b oder 4 oder 5 ausgebildet sein. Bei einem Ausführungsbeispiel der Lagervorrichtung sieht zumindest eine Aufnahme-Vorrichtung A eine Lagerung des Hilfsaggregats E in zwei Raumkoordinaten vor und lässt dabei einen Lagerungs-Freiheitsgrad in einer Raumkoordinate zu.

Bei dem in der Figur 2 dargestellten Ausführungsbeispiel der Lagervorrichtung sind drei Aufnahme-Vorrichtungen A1, A2, A3 dargestellt. Dabei bildet eine erste Aufnahmevorrichtung A1 eine Lagerstelle für das Hilfsaggregat E derart, dass diese in sämtlichen drei Raum-Koordinaten hält. Weiterhin sind bei diesem Ausführungsbeispiel eine zweite Aufnahme-Vorrichtung A2 und eine dritte Aufnahme-Vorrichtung A3 als Mehrstangen-Vorrichtungen ausgebildet. Diese können jeweils insbesondere derart ausgeführt sein, dass diese eine Lagerung des Hilfsaggregats E in zwei Raumkoordinaten vorsehen und dabei einen Lagerungs-Freiheitsgrad in einer Raumkoordinate zulassen. Die Aufnahme-Vorrichtungen halten das Hilfsaggregat E derart, dass das Hilfsaggregat E an diesen in hängender Weise gelagert ist. Nach dem Ausführungsbeispiel der Figur 2 sind die Aufnahme-Vorrichtungen A derart vorgesehen, dass diese das Hilfsaggregat E stehender Weise lagern.

Die in diesem Zusammenhang verwendeten Begriffe "hängend", "stehend", "oben", "unten" beziehen sich auf das Flugzeug- eigene Koordinatensystem, wobei "unten" aus Sicht des Passagiers oder Piloten die Richtung zum Boden angeben soll, wenn das Flugzeug am Boden. Diese Richtung (nach unten) entspricht der positiven Z_{F}-Richtung eines üblicherweise festgelegten flugzeugeigenen Koordinatensystems. In den Figuren 1 und 2 ist das jeweils zugehörige Flugzeug-Koordinatensystem mit X_{F}-Y_{F}-Z_{F}-Koordinatenachsen eingetragen, wobei die X_{F} -Achse die Flugzeug-Längsachse ist.

Im Detail zeigen die Figuren 1 und 2 einen Hilfsaggregats-Raum 9 bzw. in ein APU-Compartment. Im Compartment 9 befindet sich unter anderem die Energie-Erzeugungsvorrichtung E, bei der es sich um eine Gasturbine, die eine APU sein kann, oder um einen Motor halten kann. In Figur 1 ist als Energie-Erzeugungsvorrichtung E eine Gasturbine gezeigt, die mit einem Generator verbunden ist und diesen antreibt. Der Generator erzeugt Strom, der dem Flugzeug zur Verfügung gestellt wird, speziell zur Versorgung von Flugzeugsystemen beim Stehen des Flugzeuges am Boden. Ebenso kann die Energie-Erzeugungsvorrichtung einen Bleedair-Kompressor aufweisen, der Luft komprimiert und zum Beispiel zum Anlassen der/des Haupttriebwerke/s verwendet und/oder an die Luftfahrzeugkabine oder andere Abnehmer geleitet wird. Im Regelfall wird die Turbine mit dem gleichen Kraftstoff versorgt und angetrieben, dabei kann ein vom Haupttank unterschiedlicher Tank Verwendung finden. Handelt es sich bei der Energie-Erzeugungsvorrichtung E um einen Motor, kann aber auch ein anderer Treibstoff als der Flugkraftstoff verwendet werden.

Bei der Ausführungsform der Figur 2 weisen die Aufnahme-Vorrichtungen A jeweils eine Dämpfungs-Vorrichtung jeweils mit einem Dämpfer-Gehäuse 13 auf, an denen die Stützarme 12a, 12b angeordnet sind.

In der Figur 3a ist ein Ausführungsbeispiel der Aufnahme-Vorrichtung A1 gezeigt, das beispielsweise die Energie-Erzeugungsvorrichtung E mit einem Strukturteil 1 des Flugzeugs verbindet und das als Aufnahmevorrichtung insbesondere derart ausgebildet sein kann, dass diese eine Lagerstelle für das Hilfsaggregat E ist, die diese in sämtlichen drei Raum-Koordinaten hält. Die Aufnahme-Vorrichtung A weist eine rumpfseitige Befestigungsplatte 14 und eine versorgungsvorrichtungsseitige Befestigungsplatte 15 auf. Dabei ist die rumpfseitige Befestigungsplatte 14 fest mit einem Dämpfer-Gehäuse 13 verbunden, das eine bekannte Dämpfungsvorrichtung aufweist. Dabei kann die Dämpfung beispielsweise durch ein komprimierbares Gas, durch eine Feder, einen kompakten elastischen Körper oder eine Fluiddämpfung, bei der zum Beispiel Flüssigkeit bei Belastung aus einem ersten Behälter durch ein Ventil in einen zweiten Behälter gepresst und bei Entlastung zurück in den ersten Behälter gesaugt wird, bewirkt werden. Gekoppelt mit dem Dämpfer-Gehäuse 13 ist eine Lagerstange 16. Die Lagerstange 16 ist über ein Trägerteil 17 ebenfalls mit der versorgungsvorrichtungsseitigen Befestigungsplatte 15 gekoppelt, so dass die rumpfseitige Befestigungsplatte 14 über die Lagerstange 16 direkt oder indirekt über die Dämpfungs-Vorrichtung bzw. das Dämpfer-Gehäuse 13 mit der versorgungsvorrichtungsseitigen Befestigungsplatte 15 verbunden ist. An der versorgungseinrichtungsseitigen Befestigungsplatte 15 oder am Trägerteil 17 oder an der Energieversorgungseinrichtung E direkt oder einem an diesen Teilen befestigten Teil kann ein Ausführungsbeispiel der erfindungsgemäß vorgesehenen Auffangvorrichtung 10 (nicht in der Figur 3a dargestellt) als Ausführungsbeispiel einer Sicherheits-Lagervorrichtung befestigt sein, die im Falle einer Lösung des Trägerteils 17, der Lagerstange 16 oder des Dämpfergehäuses 13 von der Energie-Erzeugungsvorrichtung E oder der Struktur für eine weiter bestehende Verbindung der Energie-Erzeugungsvorrichtung E zu einem Strukturteil 1 sorgt, die Energie-Erzeugungsvorrichtung E einfängt und dafür sorgt, dass die Lösung der Verbindung von Trägerteil 17 und Energie-Erzeugungsvorrichtung E bzw. Trägerteil 17 und Strukturteil 1 nicht dazu führt, dass die Energie-Erzeugungsvorrichtung E ungesichert ist und an dem defekten Befestigungspunkt frei in jede Richtung bewegbar ist.

Das Trägerteil 17 kann gelenkig und insbesondere mittels eines Kugelgelenks an die Lagerstange 16 angekoppelt sein.

Bei einer Variante des in der Figur 3a dargestellten Ausführungsbeispiels der Aufnahme-Vorrichtung A kann an der Befestigungsplatte 14 das Hilfsaggregat E und die Befestigungsplatte 15 an dem Rumpfteil 1 angebracht sein.

Ein weiteres Ausführungsbeispiel der Aufnahme-Vorrichtung A ist in der Figur 3b gezeigt. Bei dem Ausführungsbeispiel der Figur 3b weist die Aufnahme-Vorrichtung A einen Befestigungsbeschlag 30 auf, an dem die Befestigungsplatte 15 zur Befestigung der Energie-Erzeugungsvorrichtung E angekoppelt ist und von dem Stützstangen oder Verbindungsstangen 31, 32 ausgehen, mit denen der Befestigungsbeschlag 30 strukturseitig befestigt werden kann. Die strukturseitige Befestigung der Verbindungsstangen 31, 32 kann jeweils mittels eines Verbindungselements oder auf andere Weise erfolgen. Die strukturseitige Befestigung der Verbindungsstangen 31, 32 kann insbesondere derart ausgeführt sein, dass diese jeweils ein Kugelgelenk ausbilden. Nach einem Ausführungsbeispiel sieht die zumindest eine Aufnahme-Vorrichtung A eine Lagerung des Hilfsaggregats E in zwei Raumkoordinaten vor und lässt dabei einen Lagerungs-Freiheitsgrad in einer Raumkoordinate zu. An dem Befestigungsbeschlag 30 kann auch eine Dämpfungsvorrichtung mit einem Dämpfergehäuse 13 integriert sein. An der Befestigungsplatte 15 oder an dem Trägerteil 17 kann die erste Halte-Vorrichtung H1 der Fangvorrichtung 10 befestigt sein.

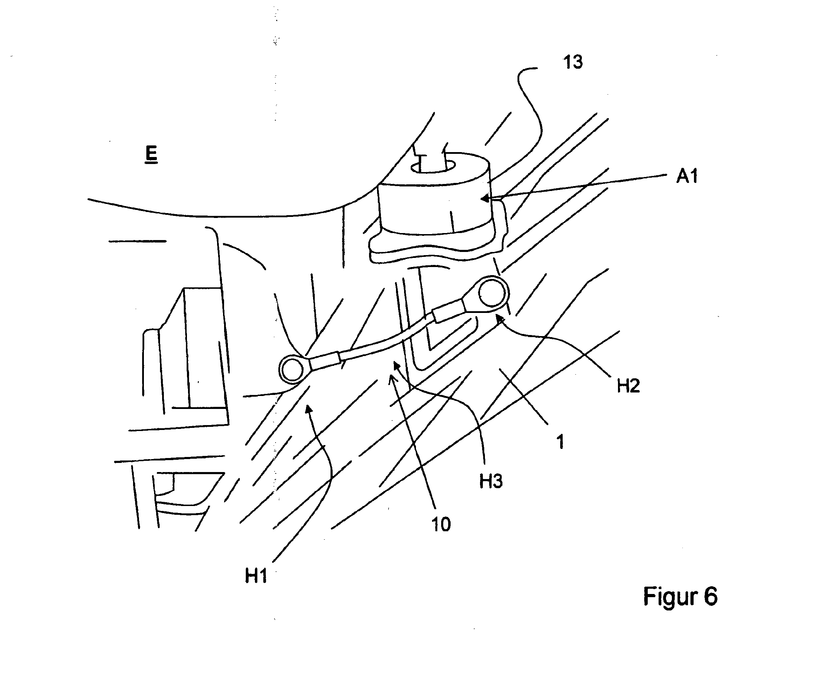

Nach der Figur 6 weist die erfindungsgemäß vorgesehene Fangvorrichtung 10 eine an das Hilfsaggregat E angekoppelte erste Halte-Vorrichtung H1, eine an zumindest einer der am Rumpfteil 1 vorgesehenen Aufnahme-Vorrichtungen A angekoppelte zweite Halte-Vorrichtung H2 und außerdem eine Verbindungs-Vorrichtung H3 zur Kopplung der Halte-Vorrichtungen H1, H2 auf. Dabei ist die Fangvorrichtung 10 erfindungsgemäß derart gestaltet, dass diese Betriebsbewegungen und/oder Vibrations-Bewegungen zwischen den Halte-Vorrichtungen H1, H2 zulässt. Die Aufnahmevorrichtung A1 kann dabei insbesondere derart ausgeführt sein, dass diese eine Lagerstelle für das Hilfsaggregat E bildet, die diese in sämtlichen drei Raum-Koordinaten hält.

Eine Aufnahme-Vorrichtung A mit einer Fangvorrichtung oder Sicherheits-Lagervorrichtung 10 ist in den Figuren 4 und 5 dargestellt. Die Sicherheits-Lagervorrichtung ist derart ausgeführt, dass diese Betriebsbewegungen und/oder Vibrations-Bewegungen des Hilfsaggregats E gegenüber dem Strukturteil in einer translatorischen Richtung oder zwei translatorischen Richtungen zulässt, wobei die zugelassenen Relativbewegungen derart vorgesehen sind, dass die Sicherheits-Lagervorrichtung bei einem Bruch der Stützvorrichtung in einem vorbestimmten Lastpfad-Bereich das Hilfsaggregat E in einem vorbestimmten Bewegungsbereich hält, bei der das Hilfsaggregat E der diese umgebenden Struktur nur einen vorbestimmten Maximaleffekt zufügen kann. Die Relativbewegungen können insbesondere eine Größe zwischen 1 mm und 30 mm haben.

Die erste Halte-Vorrichtung H1 ist aus einer Befestigungs-Vorrichtung oder einem Verbindungsteil in Form einer Befestigungs-Lasche oder kurz einer Lasche 11a gebildet, die mit einer zweiten Halte-Vorrichtung H2 in Form eines Verbindungsteils oder einer Befestigungsvorrichtung in Form einer Lasche oder eines Trägerteils 11b an der Befestigungsplatte 15 durch ein Verbindungselement 11c verbunden ist. Die mittels des Verbindungselements 11 c realisierte Verbindung kann beispielsweise eine Schrauben-Verbindung, eine Nietverbindung oder eine Splintverbindung sein. In der Figur 4 ist eine Bolzenverbindung gezeigt. Statt einer Befestigungslasche kann auch eine andersartige Befestigungsvorrichtung, wie z.B. eine Schelle, verwendet werden. Das heißt es kann eine lösbare oder unlösbare Verbindung sein, wobei alle bekannten geeigneten Verbindungslösungen mit im Umfang der Erfindung liegen. Generell wird eine Befestigungsvorrichtung, die mit der Energieversorgungs-Vorrichtung E gekoppelt ist, über ein Verbindungselement mit einer Befestigungsvorrichtung gekoppelt, die mit einem mit dem Rumpfteil 1 gekoppelten Befestigungsteil 14, z.B. einer Befestigungsplatte 14, verbunden ist.

Die Stützstangen 12, 12a, 12b können insbesondere zur rumpfseitigen Befestigung des Hilfsaggregats E vorgesehen sein. Hierzu sind an den Enden der Stützstangen 12a, 12b jeweils ein Lagerteil 12c bzw. 12d angeordnet, die mit entsprechenden an dem Strukturteil angeordneten Lagerteilen zusammenwirken. Die jeweils zusammenwirkenden Lagerteile können bei der in der Figur 4, 5 dargestellten Aufnahme-Vorrichtung A2 bzw. A3 derart ausgeführt sein, dass diese ein sphärisches Lager ausbilden. Weiterhin kann die durch die Stützarme 12a, 12b gebildete Lagerung als eine Lagerung des Hilfsaggregats E in zwei Raumkoordinaten ausgeführt sein, die einen Lagerungs-Freiheitsgrad in einer Raumkoordinate zulässt. Insbesondere dabei kann die Sicherheits-Lagervorrichtung derart ausgeführt sein, dass diese bei einem Bruch der Stützvorrichtung einer Aufnahme-Vorrichtung A in dem vorbestimmten Lastpfad-Bereich derselben einen Lastpfad in Richtung des Lagerungs-Freiheitsgrads der Aufnahme-Vorrichtung A übernimmt.

Bei dem in den Figuren 4 und 5 dargestellten Ausführungsbeispiel der Aufnahme-Vorrichtung A2 bzw. A3 läuft im Normalzustand derselben. Also wenn insbesondere kein Bruch eines Lastpfads an derselben vorliegt, der Lastpfad von dem rumpfseitigen Befestigungsteil 14 über einen daran starr angebrachte Stützvorrichtung S insbesondere in Form einer Stütze über die Brücke H1 und die daran angekoppelten Stützarme 12a, 12b in das Strukturteil.

Dabei ist die Kopplung zwischen den Befestigungsvorrichtungen erfindungsgemäß derart vorgesehen, dass diese Betriebsbewegungen und/oder Vibrations-Bewegungen zwischen den Befestigungsvorrichtungen 11a, 11b oder den Hattevorrichtungen H1, H2 zulassen. In dem in der Figur 4 dargestellten Ausführungsbeispiel bildet die Befestigungslasche 11a zusammen mit einer Öse oder Ausnehmung in dem mit der Befestigungsplatte 14 verbundenen Trägerteil 11b die Verbindungs-Vorrichtung H3 der Fangvorrichtung 10. An der Befestigungslasche 11a ist ein Verbindungselement 11c angeordnet, das die Öse durchragt. Das Verbindungselement 11 c kann insbesondere eine Schraube oder ein Bolzen sein, der eine entsprechende Bohrung der Befestigungslasche 11a durchragt und als Lager für das Verbindungselement dient. Je nach der Ausgestaltung der Halte-Vorrichtung H1 können auch mehreren Laschen (Figur 4) vorgesehen sein. Nach der Figur 4 sind zwei laschenförmige Halteteile 11a vorgesehen, in dem das Trägerteil 11b teilweise gelegen ist, wobei die Öse und die Bohrung der Befestigungslasche sich überlappen, so dass das Verbindungselement 11 c sowohl die Bohrungen als auch die Öse durchragt, um die zweite Halte-Vorrichtung H2 mit der ersten Halte-Vorrichtung H1 zu koppeln. Die Öse ist größer gestaltet als die Bohrung und derart gestaltet, dass sich die zweite Halte-Vorrichtung H2 oder das Trägerteil je nach der Größe der Öse im Verhältnis zur Größe der Bohrung bzw. der Größe des Querschnitts des Verbindungselements an dieser Stelle bewegen kann, dass Betriebsbewegungen und/oder Vibrations-Bewegungen zwischen den Halte-Vorrichtungen zugelassen werden.

Die Befestigungslasche 11a kann zusammen mit der Verbindungs-Vorrichtung H3 auch einteilig gebildet sein. Dabei kann insbesondere das Verbindungselement 11c einteilig mit der Befestigungs-Vorrichtung 11 a gebildet sein. Dabei kann weiterhin die Verbindungs-Vorrichtung H3, wie in der Figur 6 gezeigt, insbesondere anstelle des Verbindungselements 11c die Form eines Drahtes, eines Seiles, einer Kette oder eines Bandes aufweisen, oder jede andere Form aufweisen, die eine sichere, auf Zug und Biegung hoch belastbare Verbindung ermöglicht.

Alle Teile der Fangvorrichtung 10 und insbesondere die Verbindungs-Vorrichtung H3, die bei dem in der Figur 5 gezeigten Ausführungsbeispiel insbesondere aus den zwei Befestigungslaschen 11a und dem Trägerteil 11b gebildet ist, müssen eine hohe Stabilität gegen Biegebelastung und Zugbelastung aufweisen. Zudem müssen diese aus einem Material oder aus Materialien gebildet sein, die einer thermischen Belastung, beispielsweise bei einem Brand im Compartment 9 möglicht lange widerstehen, das heißt über einen möglichst langen Zeitraum funktionsfähig bleiben. Funktionsfähig meint in diesem Zusammenhang, dass die Verbindungs-Vorrichtung H3 seine Verbindungsfunktion erfüllt.

Das in der Figur 5 gezeigte Ausführungsbeispiel der Fangvorrichtung 10 ist in gleicher Weise gebildet wie das in der Figur 4 gezeigte Ausführungsbeispiel der Fangvorrichtung 10. Damit die Fangvorrichtung die zugelassenen Bewegungen der Energie-Erzeugungsvorrichtung E nicht im Normalbetrieb beschränken kann, ist die Verbindungs-Vorrichtung H3 so gebildet sein, dass die Energie-Erzeugungsvorrichtung E, oder das Gehäuse derselben, Relativbewegungen gegenüber den Aufnahme-Vorrichtungen und/oder dem Rumpfteil 1 ausführen kann.

Die erste Halte-Vorrichtung H1 bzw. das Befestigungsteil 11a ist mit einem Basisteil 20 verbunden, an dem Haltearme 12 angebracht sind, die im einzelnen mit den Bezugszeichen 12a, 12b versehen sind. An den Haltearmen 12 ist wiederum die Energieversorgungs-Vorrichtung E angebracht. Die Haltearme 12 können einstückig mit dem Basisteil 20 verbunden oder in einem Teil hergestellt sein. Alternativ können die Haltearme 12 an dem Basisteil 20 angelenkt sein. In einer speziellen Ausführungsform kann auch nur ein Haltearm 12 oder mehr als die zwei in der Figur 4 gezeigten Haltearme 1 vorgesehen sein. Nach dem Ausführungsbeispiel der Figur 5 sind zur Verbindung der Verbindungstangen 12 mit dem Basisteil 20 an diesem zwei seitliche Laschen ausgebildet, von denen die zwei Stützstangen 12 ausgehen. Die Stützstangen 12 weisen an ihren dämpfungsgehäuseseitigen Enden ebenfalls Bohrungen auf, mit denen diese über Bolzen, Schrauben, Niete oder Splinte mit der Energie-Erzeugungsvorrichtung E verbindbar sind.

Nach einem weiteren Ausführungsbeispiel ist die Verbindungs-Vorrichtung H3 der Fangvorrichtung 10 zumindest abschnittsweise flexibel ausgebildet, die und z.B. mit einem aus Drähten geflochtener Schlauch gebildet ist. Die Figur 6 zeigt eine derartige erfindungsgemäße Fangvorrichtung 10, die einerseits an einem Beschlag eines Rumpfteils 1 und andererseits an der Energie-Erzeugungsvorrichtung E befestigt ist. In Figur 6 ist eine erfindungsgemäße Fangvorrichtung 10 eingebaut in einem Compartment gezeigt, mit einer ersten Halte-Vorrichtung H2, das mit der Energie-Erzeugungsvorrichtung E und mit der zweiten Halte-Vorrichtung H2 mit einem Strukturteil 2 des Flugzeuges verbunden ist. Die beiden Halte-Vorrichtungen H1, H2 werden durch die Verbindungs-Vorrichtung H3 verbunden, die z.B. ein Band, ein Seil oder eine Kette sein, es kann elastisch und/oder dehnbar sein.

Ist die Verbindungs-Vorrichtung H3 als Band, Seil oder Kette ausgebildet, so weist die Verbindungs-Vorrichtung H3 eine größere Länge auf als nötig, um den Befestigungspunkt bzw. die erste Halte-Vorrichtung H1 der Fangvorrichtung 10 an dem Hilfsaggregat E mit dem Befestigungspunkt bzw. die erste Halte-Vorrichtung H1 der Fangvorrichtung 10 an der Struktur des Flugzeuges zu verbinden, d.h. diese Länge ist größer als der Abstand dieser Befestigungspunkte. Das heißt, ein Band, eine Kette oder ein Seil hängen in dieser Situation leicht durch. Bei durch Vibration oder Schwingungen erzeugten Bewegungen des Hilfsaggregats E relativ zur Flugzeugstruktur, bei der sich der Abstand zwischen den beiden Befestigungspunkten der Fangvorrichtung 10 verringern kann, kann die Verbindungs-Vorrichtung H3 dann weiter nachgeben, das heißt der Durchhang vergrößert sich. Bei einer Vergrößerung des Abstandes der beiden Befestigungspunkt zueinander verkleinert sich dagegen der Durchhang.

Natürlich kann die Verbindungs-Vorrichtung H3 generell aus einem dehnbaren Material bestehen. Dies kann sowohl bei der zweiteiligen Ausführung der Verbindungs-Vorrichtung H3 und auch bei der Ausführung der Verbindungs-Vorrichtung H3 mit einem flexiblen Abschnitt vorgesehen sein. Dabei kann die Dehnbarkeit auf den Materialeigenschaften des das Verbindungselement bildenden Materials beruhen, sie kann aber auch durch die Bauart des/der von Verbindungsteilen der Verbindungs-Vorrichtung H3 hergestellt werden. Dies kann auch bei an Hand der Figur 5 beschriebenen Teilen vorgesehen sein. Zum Beispiel können metallische Glieder so miteinander verbunden sein, dass sie elastisch so vorgespannt sind, dass die Verbindungs-Vorrichtung H3 die minimal notwendige Länge aufweist, die dem Hilfsaggregat E die oben beschriebenen Bewegungen ermöglicht, ohne eine Last- oder Kraftübertragung. Im Ruhezustand des Flugzeugs sind diese Elemente dann gegen die Rückstellkraft bereits leicht vorgespannt. Vergrößert sich jetzt der Abstand der Befestigungspunkte der Fangvorrichtung 10 zueinander, kann sich die Verbindungs-Vorrichtung H3 weiter dehnen, verkürzt sich der Abstand der Befestigungspunkte und zieht sich die Verbindungs-Vorrichtung H3 zusammen.

Neben diesen beschriebenen Ausführungsformen des oder der Verbindungssteile 9 können auch Kombinationen der beschriebenen Ausführungen auftreten. Zum Beispiel könnte sich die Verbindungs-Vorrichtung H3 bei einer Vergrößerung des Abstandes zwischen den Befestigungspunkten der Fangvorrichtung 10 dehnen, bei einer Verkürzung aber durchhängen, wie oben beschrieben.

Die Verbindungs-Vorrichtung H3 kann aus zwei Teilen gebildet sein, die relativ zueinander bewegbar sind. Beispielsweise kann die Verbindungs-Vorrichtung H3 aus zwei Stangen gebildet sein, die jeweils mit den Befestigungspunkten oder Halte-Vorrichtungen H1, H2 der Fangvorrichtung 10 gekoppelt sind und dabei in einem Gelenk, beispielsweise einem Kugelgelenk, mit diesen verbunden sein können. Durch eine solche Verbindung haben die beiden Stangen eine Bewegungsfreiheit, bei der diese die aufgrund von Bewegungen des Hilfsaggregats E relativ zur Struktur die im Normalzustand auftretenden Kräfte nicht aufgenommen werden. Soll die Bewegung der beiden Stangen an einem der Verbindungspunkte in eine bestimmte Richtung begrenzt oder nicht zugelassen werden, so kann dies bei der Konstruktion und Ausführung des betreffenden Kugelgelenks bzw. der betreffenden Kugelgelenke z.B. durch Vorsehen entsprechender Begrenzer berücksichtigt werden.

Ist die Verbindungs-Vorrichtung H3 aus zwei Teilen gebildet, so kann die Verbindungs-Vorrichtung H3 auch derart gestaltet sein, dass eines der Teile in das andere bei Druckbelastung eingeschoben und bei Zugbelastung herausgezogen wird. Das Herausziehen muss dabei auf einen maximalen Weg begrenzt sein, der im Regelfall aber erst beim Auftreten eines Schadens an einer der Verbindungspunkte zwischen dem Hilfsaggregat E, der Fangvorrichtung und/oder zwischen dem Strukturteil und der Fangvorrichtung 10 erreicht wird. Soll die Fangvorrichtung 10 zusätzlich zu einer reinen Längsbewegung auch weitere Bewegungsfreiheitsgrade haben, können diese Verbindungspunkte wieder wie oben beschrieben als Gelenklager und insbesondere als Kugellager ausgebildet sein.

Nach einem weiteren Aspekt der Erfindung ist eine Lagervorrichtung zur Lagerung eines Hilfsaggregats E an einem Strukturteil eines Flugzeugs vorgesehen, aufweisend zumindest zwei Aufnahme-Vorrichtungen A zum Befestigen des Hilfsaggregats E,
- wobei eine erste Aufnahmevorrichtung A1 eine Lagerstelle für das Hilfsaggregat E ausbildet, die diese in sämtlichen drei Raum-Koordinaten lagert und dass der ersten Aufnahmevorrichtung A1 eine Auffangvorrichtung 10 zugeordnet ist, die zum Halten des Hilfsaggregats E unter Ausbildung eines Sicherheits-Lastpfades geeignet ist, wenn an der ersten Halte-Vorrichtung H1 ein Bruchschaden auftritt, wobei die Verbindungs-Vorrichtung H3 bei der Ausbildung eines Sicherheits-Lastpfades eine Länge aufweist, die um einen Betrag größer ist als der Abstand zwischen der ersten Halte-Vorrichtung H1 und der zweiten Halte-Vorrichtung H2 im Normalzustand der ersten Aufnahme-Vorrichtung A1 und die Verbindungs-Vorrichtung H3 im Normalzustand der ersten Aufnahme-Vorrichtung A1 Betriebsbewegungen und/oder Vibrations-Bewegungen des Hilfsaggregats E gegenüber dem Strukturteil dämpfungsfrei zulässt,
- wobei zumindest eine zweite Aufnahme-Vorrichtung A2, A3 eine Lagerung des Hilfsaggregats E in zwei Raumkoordinaten vorsieht und dabei einen Lagerungs-Freiheitsgrad in einer Raumkoordinate zulässt und dass der zweiten Aufnahme-Vorrichtung A2, A3 eine Sicherheits-Lagervorrichtung zugeordnet ist, die geeignet ist, bei einem Bruch der Stützvorrichtung einer Aufnahme-Vorrichtung A in dem vorbestimmten Lastpfad-Bereich derselben einen Lastpfad in Richtung des Lagerungs-Freiheitsgrads der Aufnahme-Vorrichtung A zu übernehmen.

## Patentansprüche

1. Lagervorrichtung für ein Hilfsaggregat (E) an einem Strukturteil eines Flugzeugs, aufweisend zumindest zwei Aufnahme-Vorrichtungen (A) zum Befestigen des Hilfsaggregats (E),
**dadurch gekennzeichnet,**
• **dass** die Lagervorrichtung eine Auffangvorrichtung (10) aufweist mit einer an dem Hilfsaggregat (E) angeordneten ersten Halte-Vorrichtung (H1), mit einer an zumindest einer an dem Rumpfteil (1) oder an zumindest einer ersten (A1) der Aufnahme-Vorrichtungen (A) angeordneten zweiten Halte-Vorrichtung (H2) und
mit einer Verbindungs-Vorrichtung (H3) zur Kopplung der Halte-Vorrichtungen (H1, H2),
• **dass** die Auffangvorrichtung (10) zum Halten des Hilfsaggregats (E) unter Ausbildung eines Sicherheits-Lastpfades geeignet ist, falls an der ersten Aufnahme-Vorrichtung (A1) gegenüber einem Normalzustand ein Bruchschaden auftritt, wobei die Verbindungs-Vorrichtung (H3) als kettenförmiges oder zumindest abschnittsweise flexibles oder zumindest abschnittsweise bandförmiges oder einem dehnbaren Material gebildetes Verbindungsteil oder aus zwei Stangen, die gelenkig oder zueinander bewegbar gekoppelt sind, oder als Teleskop-Rohr oder als Gliederstab, dessen Glieder in ihrer Länge hintereinander gekoppelt sind, gebildet ist, das mit einem ersten Ende an der ersten Halte-Vorrichtung (H1) und mit einem zweiten Ende an der zweiten Halte-Vorrichtung (H2) befestigt ist, wobei die Verbindungs-Vorrichtung (H3) bei der Ausbildung eines Sicherheits-Lastpfades eine Länge aufweist, bei dem der Abstand zwischen der ersten Halte-Vorrichtung (H1) und der zweiten Halte-Vorrichtung (H2) um einen Betrag größer ist als der Abstand zwischen der ersten Halte-Vorrichtung (H1) und der zweiten Halte-Vorrichtung (H2) im Normalzustand der ersten Aufnahme-Vorrichtung (A1) und die Verbindungs-Vorrichtung (H3) im Normalzustand der ersten Aufnahme-Vorrichtung (A1) Betriebsbewegungen und/oder Vibrations-Bewegungen des Hilfsaggregats (E) gegenüber dem Strukturteil dämpfungsfrei zulässt.

2. Lagervorrichtung nach dem Anspruch 1, **dadurch gekennzeichnet, dass** die erste Aufnahmevorrichtung (A1) eine Lagerstelle für das Hilfsaggregat (E) ist, die diese in sämtlichen drei Raum-Koordinaten hält.

3. Lagervorrichtung nach einem der voranstehenden Ansprüche, **dadurch gekennzeichnet, dass** zumindest eine Aufnahme-Vorrichtung (A) eine Dämpfungs-Vorrichtung zur Dämpfung von Vibrationen des Hilfsaggregats gegenüber dem Rumpfteil (1) aufweist.

4. Lagervorrichtung nachdem Anspruch 3, **dadurch gekennzeichnet, dass** die erste Haltevorrichtung aus einem ersten Verbindungsteil (11a) und die zweite Haltevorrichtung aus einem zweiten Verbindungsteil (11b) gebildet ist, wobei das erste Verbindungsteil (11a) an zumindest einer der Aufnahme-Vorrichtungen (A) und/oder an einem Dämpfer-Gehäuse (13) der Dämpfungs-Vorrichtung und/oder dem Rumpfteil (1) befestigt ist und das zweite Verbindungsteil (11b) an dem Hilfsaggregat (E) befestigt ist und wobei die Verbindungsteile (11b) derart miteinander gekoppelt sind, dass diese relativ zueinander bewegbar sind.

5. Lagervorrichtung nach dem Anspruch 4, **dadurch gekennzeichnet, dass** die Verbindungsteile (11a, 11b) über eine Bolzen-Ösen-Verbindung (11a, 11b, 11c) derart miteinander gekoppelt sind, dass diese relativ zueinander bewegbar sind.

6. Lagervorrichtung nach einem der voranstehenden Ansprüche, **dadurch gekennzeichnet, dass** zumindest eine Aufnahme-Vorrichtung (A) aus einem rumpfseitigen Befestigungsteil(14), einem daran angebrachten Stützteil (S) und zumindest zwei daran angebrachten Stützstangen (12a, 12b) gebildet ist, an deren Enden jeweils ein Lagerteil (12c, 12d) angebracht ist, das jeweils mit einer entsprechenden Lagerstelle des Hilfsaggregats (E) ein sphärisches Lager ausbildet.

7. Flugzeug aufweisend:
• einen Rumpf mit einem Rumpfteil (1), der einen Raum (13) aufweist,
• ein in dem Raum (13) angeordnetes Hilfsaggregat (E),
• eine Lagervorrichtung, die nach einem der Ansprüche 1 bis 6 gebildet ist.

8. Flugzeug nach dem Anspruch 7, **dadurch gekennzeichnet, dass** die Aufnahme-Vorrichtungen (A) derart angeordnet sind, dass diese das Hilfsaggregat (E) stehend lagern.

9. Flugzeug nach einem der Ansprüche 7 oder 8, **dadurch gekennzeichnet, dass** die Aufnahme-Vorrichtungen (A) auf dem Rücken des Rumpfteils (1) angebracht sind.

10. Flugzeug nach dem Anspruch 9, **dadurch gekennzeichnet, dass** das Flugzeug ein Hochdecker-Flugzeug ist und der Raum (13), in dem das Hilfsaggregat (E) angeordnet ist, zwischen einem Flügelabschnitt, einem Rumpfabschnitt und einem Verschalungsteil gebildet ist, welche einen Übergang zwischen Flügel und Rumpf bildet.

11. Flugzeug nach einem der Ansprüche 7 bis 10, **dadurch gekennzeichnet, dass** das Hilfsaggregat (E) aufweist:
• ein Gasturbinen-Triebwerk mit einer Ausgangswelle,
• einen an diesen angekoppelten Druckluft-Kompressor, dessen Antriebswelle mit der Ausgangswelle des Gasturbinen-Triebwerks gekoppelt ist.

## Claims

1. A mounting device for mounting an ancillary equipment (E) on a structural component of an aircraft, said mounting device featuring at least two supporting devices (A) for fastening the ancillary equipment (E),
**characterized in that**
• the mounting device features a catching device (10) that comprises a first holding device (H1) arranged on the ancillary equipment (E), a second holding device (H2) arranged on at least the fuselage section (1) or at least on a first (A1) of the supporting devices (A), and a connecting device (H3) for coupling the holding devices (H1, H2), and
• **in that** the catching device (10) is suitable for holding the ancillary equipment (E) and forms, with regard to a normal state, a safety load path in case breakage occurs on the first supporting device (A1), wherein the connecting device (H3) is formed as chain-like connecting part or at least sectionally flexible connecting part or at least sectionally in a band-shaped connecting part or as a connecting part which is made from an expandable material or wherein the connecting device (H3) is formed of two rods which are pivotally or moveably coupled to each other, or wherein the connecting part is formed of a telescopic tube or of a sectional rod, the sections of which are coupled in succession referred to their length, the connecting device (H3) being coupled with a first end to a first holding device (H1) and with a second end to a second holding device (H2), wherein the connecting device (H3) is designed such that, when it forms a safety load path, its length is greater than the distance between the first holding device (H1) and the second holding device (H2) in the normal state of the first supporting device (A1) by a certain amount than the distance between the first holding device (H1) and the second holding device (H2), and that the connecting device (H3) allows operational motions and/or vibrational motions of the ancillary equipment (E) relative to the structural component without damping in the normal state of the first supporting device (A1).

2. The mounting device according to claim 1, **characterized in that** the first supporting device (A1) forms a mounting point for the ancillary equipment (E) that holds the latter in all three space coordinates.

3. The mounting device according to one of the preceding claims, **characterized in that** the at least one supporting device (A) features a damping device for damping vibrations of the ancillary equipment relative to the fuselage section (1).

4. The mounting device according to claim 3, **characterized in that** the first holding device is formed of a first connecting part (11a) and the second holding device is formed of a second connecting part (11b), wherein the first connecting part (11a) is fastened on at least one of the supporting devices (A) and/or on a damper housing (13) of the damping device and/or the fuselage section (1) and the second connecting part (11 b) is fastened on the ancillary equipment (E), and wherein the connecting parts (11 b) are coupled in such a way that they can be moved relative to one another.

5. The mounting device according to claim 4, **characterized in that** the connecting parts (11 a, 11 b) are coupled to one another by means of a bolt-eyelet connection (11 a, 11 b, 11c) such that they can be moved relative to one another.

6. The mounting device according to one of the preceding claims, **characterized in that** at least one supporting device (A) is formed of a fastening part (14) on the fuselage side, a supporting part (S) arranged thereon and at least two supporting rods (12a, 12b) arranged thereon, wherein a mounting part (12c, 12d) is respectively arranged on the ends of the supporting rods and respectively forms a spherical mounting together with a corresponding mounting point of the ancillary equipment (E).

7. An aircraft featuring:
• a fuselage with the fuselage part (1) that features a space (13),
• an ancillary equipment (E) arranged in the space (13), and
• a mounting device that is realized in accordance with one of claims 1 to 6.

8. The aircraft according to Claim 7, **characterized in that** the supporting devices (A) are arranged such that they mount the ancillary equipment (E) in an upright fashion.

9. The aircraft according to claim 7 or 8, **characterized in that** the supporting devices (A) are arranged on the upper side of the fuselage part (1).

10. The aircraft according to claim 9, **characterized in that** the aircraft is a high wing aircraft and **in that** the space (13), in which the ancillary equipment (E) is arranged, lies between a wing section, a fuselage section and a casing part that forms a transition between the wing and the fuselage.

11. The aircraft according to claims 7 to 10, **characterized in that** the ancillary equipment (E) features:
• a gas turbine engine with an output shaft, and
• an air compressor that is coupled to the gas turbine engine and the drive shaft of which is coupled to the output shaft of the gas turbine.

## Revendications

1. Dispositif de palier pour un groupe auxiliaire (E) sur une pièce structurelle d'un avion, présentant au moins deux dispositifs de réception (A) pour fixer le groupe auxiliaire (E),
**caractérisé en ce**
- **que** le dispositif de palier présente un dispositif réceptacle (10) avec un premier dispositif de retenue (H1) disposé sur le groupe auxiliaire (E), avec un deuxième dispositif de retenue (H2) disposé sur au moins un des dispositifs de réception (A) sur la partie de fuselage (1) ou sur au moins un premier (A1) des dispositifs de réception (A) et avec un dispositif de liaison (H3) pour coupler les dispositifs de fixation (H1, H2),
- **que** le dispositif réceptacle (10) est approprié pour retenir le groupe auxiliaire (E) en formant un chemin de charge de sécurité si une rupture se produit sur le premier dispositif de réception (A1) par rapport à un état normal, sachant que le dispositif de liaison (H3) est formé en tant que pièce de liaison en forme de chaîne ou au moins flexible par tronçons ou au moins en bande par tronçons ou en un matériau extensible ou de deux tiges qui sont couplées en articulation ou de manière mobile l'une par rapport à l'autre, ou en tant que tube de télescope ou en tant que barre articulée dont les éléments sont couplés l'un derrière l'autre dans leur longueur, laquelle est fixée au premier dispositif de retenue (H1) par une première extrémité et au deuxième dispositif de retenue (H2) par une deuxième extrémité, sachant que le dispositif de liaison (H3) présente lors de la formation d'un chemin de charge de sécurité, une longueur dans laquelle la distance entre le premier dispositif de retenue (H1) et le deuxième dispositif de retenue (H2) est plus grande d'une valeur que la distance entre le premier dispositif de retenue (H1) et le deuxième dispositif de retenue (H2) dans l'état normal du premier dispositif de réception (A1), et le dispositif de liaison (H3) dans l'état normal du premier dispositif de réception (A1), autorise des mouvements de fonctionnement et/ou des mouvements vibratoires sans amortissement du groupe auxiliaire (E) par rapport à la pièce structurelle.

2. Dispositif de palier selon la revendication 1, **caractérisé en ce que** le premier dispositif de réception (A1) est un point de palier pour le groupe auxiliaire (E) qui retient celui-ci dans un ensemble de trois coordonnées spatiales.

3. Dispositif de palier selon l'une des revendications précédentes, **caractérisé en ce qu'**au moins un dispositif de réception (A) présente un dispositif d'amortissement pour amortir des vibrations du groupe auxiliaire par rapport à la pièce de fuselage (1).

4. Dispositif de palier selon la revendication 3, **caractérisé en ce que** le premier dispositif de retenue est formé dans une première pièce de liaison (11a) et le deuxième dispositif de retenue est fabriqué dans une deuxième pièce de liaison (11b), sachant que la première pièce de liaison (11a) est fixée sur au moins un des dispositifs de réception (A) et/ou sur un boîtier amortisseur (13) du dispositif d'amortissement et/ou sur la pièce de fuselage (1) et que la deuxième pièce de liaison (11b) est fixée sur le groupe auxiliaire (E) et sachant que les pièces de liaison (11b) sont ainsi couplées entre elles qu'elles sont mobiles l'une par rapport à l'autre.

5. Dispositif de palier selon la revendication 4, **caractérisé en ce que** les pièces de liaison (11a, 11b) sont couplées entre elles par une liaison par goujon/oeillet (11a, 11b, 11c) de telle sorte qu'elles sont mobiles l'une par rapport à l'autre.

6. Dispositif de palier selon l'une des revendications précédentes, **caractérisé en ce qu'**au moins un dispositif de réception (A) est formé d'une pièce de fixation (14) côté fuselage, une pièce d'appui (S) placée dessus et au moins deux tiges d'appui (12a, 12b) placées dessus, sur les extrémités desquelles une pièce de palier (12c, 12d) respective est posée, qui forme un palier sphérique avec respectivement un point de palier correspondant du groupe auxiliaire (E).

7. Avion présentant :
- un fuselage avec une pièce de fuselage (1) qui présente un espace (13),
- un groupe auxiliaire (E) disposé dans l'espace (13),
- un dispositif de palier formé selon l'une des revendications 1 à 6.

8. Avion selon la revendication 7, **caractérisé en ce que** les dispositifs de réception (A) sont ainsi disposés qu'ils soutiennent le groupe auxiliaire (E) en position debout.

9. Avion selon la revendication 7 ou 8, **caractérisé en ce que** dispositifs de réception (A) sont disposés sur le dos de la pièce de fuselage (1).

10. Avion selon la revendication 9, **caractérisé en ce que** l'avion est un monoplan et l'espace (13) dans lequel le groupe auxiliaire (E) est disposé, est formé entre une section d'aile, une section de fuselage et une section de carénage qui forme un passage entre les ailes et le fuselage.

11. Avion selon l'une des revendications 7 à 10, **caractérisé en ce que** le groupe auxiliaire (E) présente :
- un réacteur à turbine à gaz avec un arbre de sortie,
- un compresseur à air comprimé couplé à ceux-ci dont l'arbre d'entraînement est couplé à l'arbre de sortie du réacteur à turbine à gaz.
